# EUROPEAN PATENT SPECIFICATION

(11) **EP 4 117 073 B1**
(45) Date of publication and mention of the grant of the patent: **23.09.2026**
(21) Application number: 21886691.1
(22) Date of filing: 21.10.2021
(51) Int. Cl.: H01M 10/0567, H01M 10/0569, H01M 4/36, H01M 4/38, H01M 4/62, H01M 10/052, H01M 4/02

(54) **LITHIUM-SULFUR SECONDARY BATTERY COMPRISING ELECTROLYTE CONTAINING S-O-BASED CYCLIC COMPOUND**
LITHIUM-SCHWEFEL-SEKUNDÄRBATTERIE MIT ELEKTROLYT MIT EINER CYCLISCHEN VERBINDUNG AUF S-O-BASIS
BATTERIE SECONDAIRE AU LITHIUM-SOUFRE COMPRENANT UN ÉLECTROLYTE CONTENANT UN COMPOSÉ CYCLIQUE À BASE DE S-O

(30) Priority: 29.10.2020 KR 20200142412; 29.10.2020 KR 20200142395; 29.10.2020 KR 20200142367; 29.10.2020 KR 20200142380
(43) Date of publication of application: 11.01.2023
(73) Proprietor: LG Energy Solution, Ltd., Seoul 07335 (KR)
(72) Inventor: PARK, Intae, Daejeon 34122 (KR); KIM, Yonghwi, Daejeon 34122 (KR); PARK, Changhun, Daejeon 34122 (KR); LEE, Changhoon, Daejeon 34122 (KR)
(74) Representative: Goddar, Heinz J.
(86) International application number: PCT/KR2021/014780
(87) International publication number: WO 2022/092697

(56) References cited:
- WO-A1-2006/069544
- WO-A1-2018/232863
- CN-A- 108 832 149
- KR-A- 20020 008 705
- KR-A- 20040 006 994
- KR-A- 20170 084 772
- KR-A- 20200 117 752
- KR-A- 20200 117 752
- US-A1- 2002 102 466

## Description

### [Technical Field]

The present invention relates to a lithium-sulfur secondary battery comprising an electrolyte containing a SO-based cyclic compound. Specifically, the present invention relates to a lithium-sulfur secondary battery comprising an electrolyte containing ethylene sulfite, 1,3-propane sultone, 1,3-propene sultone or ethylene sulfate which is a S-O-based cyclic compound.

### [Background Art]

As the application area of secondary battery are expanding to the electric vehicles (EV) or the energy storage devices (ESS), the lithium-ion secondary battery with relatively low weight-to-energy storage density (~ 250 Wh/kg) are facing limitations in application to such products. Alternatively, since the lithium-sulfur secondary battery can achieve the theoretically high weight-to-energy storage density (~ 2,600 Wh/kg), it is attracting attention as a next-generation secondary battery technology.

The lithium-sulfur secondary battery means a battery system using a sulfur-based material having a sulfur-sulfur bond (S-S bond) as a positive electrode active material and using lithium metal as a negative electrode active material. Sulfur, which is the main material of the positive electrode active material, has advantages that it is very rich in resources, is not toxic, and has a low atomic weight.

In the lithium-sulfur secondary battery, when discharging the battery, lithium which is a negative electrode active material is oxidized while releasing electron and thus ionizing, and the sulfur-based material which is a positive electrode active material is reduced while accepting the electron. In that case, the oxidation reaction of lithium is a process by which lithium metal releases electron and is converted to lithium cation form. In addition, the reduction reaction of sulfur is a process by which the S-S bond accepts two electrons and is converted to a sulfur anion form. The lithium cation produced by the oxidation reaction of lithium is transferred to the positive electrode through the electrolyte and is combined with the sulfur anion generated by the reduction reaction of sulfur to form a salt. Specifically, sulfur before discharging has a cyclic S₈ structure, which is converted to lithium polysulfide (LiSₓ) by the reduction reaction. When the lithium polysulfide is completely reduced, lithium sulfide (Li₂S) is produced.

Sulfur, which is a positive electrode active material, is difficult to secure reactivity with electrons and lithium ions in a solid state due to its low electrical conductivity characteristics. In the existing lithium-sulfur secondary battery, in order to improve the reactivity of sulfur, an intermediate polysulfide in the form of Li₂Sₓ is generated to induce a liquid phase reaction and improve the reactivity. In this case, an ether-based solvent such as dioxolane and dimethoxy ethane, which are highly soluble for lithium polysulfide, is used as a solvent for the electrolyte solution. Also, in the conventional lithium-sulfur secondary battery, a catholyte-type lithium-sulfur secondary battery system is built to improve the reactivity, and in this case, due to the characteristics of lithium polysulfide dissolved in the electrolyte solution, the reactivity and lifetime characteristics of sulfur are affected depending on the content of the electrolyte solution. In order to achieve high energy density, the electrolyte solution should be injected with a low content, but as the content of the electrolyte solution is decreased, the concentration of lithium polysulfide in the electrolyte solution is increased, making it difficult for the battery to operate normally due to a decrease in the fluidity of the active material and an increase in side reactions.

In order to manufacture a lithium-sulfur secondary battery with high energy density, a battery system capable of operating a high-loading, low-porosity electrode is required, and research on such a battery system is continuously conducted in the related art.

### [Prior Art Document]

### [Patent Document]

(Patent Document 1) Korean Patent Laid-open Publication No. 10-2019-0006923
WO 2018/232 863 A1 relates to a lithium-sulfur battery electrolyte and a preparation method therefor. The lithium-sulfur battery electrolyte comprises an ether organic solvent, a lithium salt, and an ester additive, and the ester additive is one selected from carbonic ester and sulfite ester or a mixture thereof. The specific additive is mixed with the ether organic solvent and the lithium salt so that reaction with polysulfide produced in a charging/discharging process of a lithium-sulfur battery is enabled in the charging/discharging process, so as to inhibit shuttle of the polysulfide.
US 2002/102 466 A1 discloses an electrolyte for a lithium-sulfur battery having one solvent having a dielectric constant that is greater than or equal to 20, another solvent having a viscosity that is less than or equal to 1.3, and an electrolyte salt.

### [Disclosure]

### [Technical Problem]

It is an object of the present invention to provide a lithium-sulfur secondary battery capable of improving the cycle performance of a lithium-sulfur secondary battery by adding a S-O-based cyclic compound to the electrolyte of the lithium-sulfur secondary battery.

### [Technical Solution]

The present invention provides a lithium-sulfur secondary battery comprising a positive electrode, a negative electrode, a separator and an electrolyte, and the electrolyte contains a S-O-based cyclic compound.

In one embodiment of the present invention, the S-O-based cyclic compound is ethylene sulfite, 1,3-propane sultone, 1,3-propene sultone, ethylene sulfate or a combination thereof, wherein the S-O-based cyclic compound is contained in the electrolyte in an amount exceeding 0 ppm and less than 1,000 ppm based on the total weight of the electrolyte.

In one embodiment of the present invention, the electrolyte further contains a non-aqueous solvent and a lithium salt, and the non-aqueous solvent comprises a fluorinated linear ether.

In one embodiment of the present invention, the fluorinated linear ether is selected from the group consisting of 1,1,2,2-tetrafluoroethyl 2,2,3,3-tetrafluoropropyl ether, 1,1,2,2-tetrafluoroethyl 2,2,2-trifluoroethyl ether, bis(fluoromethyl) ether, bis(2,2,2-trifluoroethyl) ether, propyl 1,1,2,2-tetrafluoroethyl ether, isopropyl 1,1,2,2-tetrafluoroethyl ether, 1,1,2,2-tetrafluoroethyl isobutyl ether, 1,1,2,3,3,3-hexafluoropropyl ethyl ether, 1H,1H,2'H,3H-decafluorodipropyl ether, 1H,1H,2'H-perfluorodipropyl ether, and combinations thereof.

In one embodiment of the present invention, the non-aqueous solvent contains 50 wt.% to 99 wt.% of fluorinated linear ether based on the total weight of the non-aqueous solvent.

In one embodiment of the present invention, the lithium salt is selected from the group consisting of LiN(FSO₂)₂, LiSCN, LiN(CN)₂, LiN(CF₃SO₂)₂, LiN(CF₃CF₂SO₂)₂, LiPF₆, LiF, LiCl, LiBr, LiI, LiNO₃, LiClO₄, LiAlO₄, LiAlCl₄, LiSbF₆, LiAsF₆, LiBF₂C₂O₄, LiBC₄O₈, Li(CF₃)₂PF₄, Li(CF₃)₃PF₃, Li(CF₃)₄PF₂, Li(CF₃)₅PF, Li(CF₃)₆P, LiCF₃SO₃, LiC₄F₉SO₃, LiCF₃CF₂SO₃, LiCF₃CF₂(CF₃)₂CO, Li(CF₃SO₂)₂CH, LiCF₃(CF₂)₇SO₃, LiCF₃CO₂, LiCH₃CO₂, and combinations thereof.

In one embodiment of the present invention, the positive electrode comprises a positive electrode active material layer, and the positive electrode active material layer has a porosity of 30% or more and less than 70%.

In one embodiment of the present invention, the positive electrode has a loading amount of the positive electrode active material of 3.0 mAh/cm² to 10.0 mAh/cm².

In one embodiment of the present invention, the positive electrode includes a sulfur-carbon composite as a positive electrode active material.

In one embodiment of the present invention, the sulfur-carbon composite contains 60 wt.% to 90 wt.% of sulfur based on the total weight of the sulfur-carbon composite.

In one embodiment of the present invention, the non-aqueous solvent further includes non-fluorinated linear ether, cyclic ether, polyether, or a mixture thereof.

### [Advantageous Effects]

In the lithium-sulfur secondary battery according to the present invention, the cycle performance of the lithium-sulfur secondary battery is improved by adding a specific SO-based cyclic compound to the electrolyte.

As a S-O-based cyclic compound, less than 1,000 ppm of ethylene sulfite, 1,3-propane sultone, 1,3-propene sultone or ethylene sulfate is added to the electrolyte of the lithium-sulfur secondary battery. Considering that in the relevant technical field, generally, when the additive for the electrolyte is used in an amount of 1 wt.% (10,000 ppm) or more, the desired effect of improving the performance of the battery can be obtained, ethylene sulfite, 1,3-propane sultone, 1,3-propene sultone or ethylene sulfate is different from general additives for the electrolyte used in the technical field.

When ethylene sulfite, 1,3-propane sultone, 1,3-propene sultone or ethylene sulfate is used in the same amount as general additives for the electrolyte in the related art, the effect of improving the cycle performance of the lithium-sulfur secondary battery is insignificant or almost nonexistent.

In addition, even when used in a lithium secondary battery other than a lithium-sulfur secondary battery, the effect of improving the cycle performance of the lithium secondary battery is insignificant or almost nonexistent.

### [Best Mode]

The embodiments provided according to the present invention can all be achieved by the following description.

With respect to the physical properties described herein, if measurement conditions and methods are not specifically described, the physical properties are measured according to measurement conditions and methods generally used by those skilled in the art.

A "lithium secondary battery" is generally a higher concept than a lithium-sulfur secondary battery and comprises the lithium-sulfur secondary battery. However, the "lithium secondary battery" in this specification refers to a general lithium secondary battery using lithium metal oxide as a positive electrode active material, and is used separately from the lithium-sulfur secondary battery.

The present invention provides a lithium-sulfur secondary battery including a positive electrode, a negative electrode, a separator, and an electrolyte, wherein the electrolyte contains a S-O-based cyclic compoundbeing ethylene sulfite (ES), 1,3-propane sultone (PS), 1,3-propene sultone (PRS), ethylene sulfate (Esa), or a combination thereof, and wherein the S-O-based cyclic compound is contained in the electrolyte in an amount exceeding 0 ppm and less than 1,000 ppm based on the total weight of the electrolyte. Ethylene sulfite is a compound having a structure of Formula 1 below, and 1,3-propane sultone is a compound having a structure of Formula 2 below. 1,3-propene sultone is a compound having a structure of Formula 3 below, and ethylene sulfate is a compound having a structure of Formula 4 below. The inventors of the present invention have completed the invention by confirming that the cycle performance of the battery is improved, when a S-O-based cyclic compound is added to the electrolyte in a lithium-sulfur secondary battery using a material containing sulfur as a positive electrode active material, not a general lithium secondary battery using lithium metal oxide as a positive electrode active material:

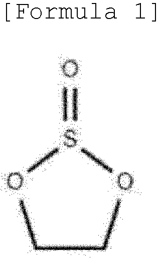

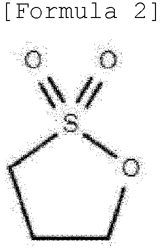

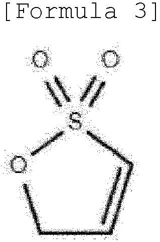

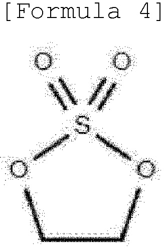

Considering that in the case of the lithium secondary battery, which has the same composition except for the positive electrode active material, there is little or no effect of improving the cycle performance of the battery, it is expected that ethylene sulfite, 1,3-propane sultone, 1,3-propene sultone or ethylene sulfate added to the electrolyte interacts directly with the positive electrode active material of the lithium-sulfur secondary battery.

According to the present invention, electrolyte contains exceeding 0 ppm, preferably, 50 ppm or more, 100 ppm or more, 150 ppm or more, 200 ppm or more, 250 ppm or more, 300 ppm or more, 350 ppm or more, 400 ppm or more, 450 ppm or more, or 500 ppm or more of the S-O-based cyclic compound, based on the total weight of the electrolyte, and the electrolyte contains less than 1,000 ppm, preferably, 950 ppm or less, 900 ppm or less, 850 ppm or less, 800 ppm or less, 750 ppm or less, 700 ppm or less, 650 ppm or less, 600 ppm or less, 550 ppm or less or 500 ppm or less of the S-O-based cyclic compound, based on the total weight of the electrolyte. In the present invention, one feature is that a small amount, such as less than 1,000 ppm, of the S-O-based cyclic compound is added to the electrolyte. If the S-O-based cyclic compound is added in a large amount of 1,000 ppm or more, there may be little or no effect of improving the cycle performance. In the related art, considering that the desired effect of improving the performance of the battery can be obtained, when the additives for the electrolyte solution are usually used in amounts of 1 wt.% (10,000 ppm) or more, the features described above are not common in the art.

The electrolyte constituting the lithium-sulfur secondary battery according to the present invention comprises a non-aqueous solvent and lithium salt in addition to the above-described S-O-based cyclic compound. As described above, since the effect of improving the cycle performance of the battery by the use of the S-O-based cyclic compound can occur by direct interaction between the S-O-based cyclic compound and the positive electrode active material of the lithium-sulfur secondary battery, the types of the non-aqueous solvent and the lithium salt are not particularly limited. However, if a more suitable non-aqueous solvent and lithium salt are selected for the lithium-sulfur secondary battery, the overall cycle performance of the battery may be excellent.

According to one embodiment of the present invention, the non-aqueous solvent is an ether-based solvent. The ether-based solvent may be a linear ether, a cyclic ether, a polyether, or mixtures thereof.

The linear ether may be selected from the group consisting of methyl ethyl ether, methyl propyl ether, methyl butyl ether, ethyl propyl ether, ethyl isopropyl ether, ethyl butyl ether, ethyl isobutyl ether, diethyl ether, dipropyl ether, dibutyl ether, dimethoxy methane (DMM), trimethoxy methane (TMM), dimethoxy ethane (DME), diethoxy ethane (DEE), dimethoxy propane (DMP), and combinations thereof, but is not limited thereto.

The cyclic ether may be selected from the group consisting of dioxolane (DOL), methyl dioxolane, oxane, dioxane, trioxane, tetrahydrofuran (THF), dihydropyran (DHP), tetrahydropyran (THP) and methyl tetrahydrofuran, furan, methyl furan, and combinations thereof, but is not limited thereto.

The polyether may be selected from the group consisting of diethylene glycol dimethyl ether, triethylene glycol dimethyl ether, tetraethylene glycol dimethyl ether, ethylene glycol divinyl ether, diethyleneglycol divinyl ether, triethyleneglycol divinyl ether, dipropyleneglycol dimethylene ether, butylene glycol ether, and combinations thereof, but is not limited thereto.

The linear ether, cyclic ether and polyether may be fluorinated ether compounds. The fluorinated form of the compound may be a fluorinated linear ether, and the fluorinated linear ether may be selected from the group consisting of 1,1,2,2-tetrafluoroethyl 2,2,3,3-tetrafluoropropyl ether (TTE), 1,1,2,2-tetrafluoroethyl 2,2,2-trifluoroethyl ether, bis(fluoromethyl) ether, bis(2,2,2-trifluoroehtyl) ether, propyl 1,1,2,2-tetrafluoroethyl ether, isopropyl 1,1,2,2-tetrafluoroehtyl ether, 1,1,2,2-tetrafluoroethyl isobutyl ether, 1,1,2,3,3,3-hexafluoropropyl ethyl ether, 1H,1H,2'H,3H-decafluorodipropyl ether, 1H,1H,2'H-perfluorodipropyl ether, and combinations thereof, but is not limited thereto.

The fluorinated ether compound may be used in combination with a non-fluorinated linear ether, a cyclic ether, a polyether, or a combination thereof. According to one embodiment of the present invention, the fluorinated ether compound may be contained in the electrolyte in an amount of 50 wt.% to 99 wt.%, preferably 60 wt.% to 95 wt.%, more preferably 70 wt.% to 90 wt.%, based on the total weight of the solvent constituting the electrolyte. If the fluorinated ether compound is contained in the electrolyte in an amount of 50 wt.% or more, based on the total weight of the solvent constituting the electrolyte, the performance of the battery may be improved when used with the positive electrode of the lithium-sulfur secondary battery, which has low porosity and high loading amount of positive electrode active material.

The lithium salt is a material that can be easily dissolved in a non-aqueous solvent, and may be selected from the group consisting of LiN(FSO₂)₂, LiSCN, LiN(CN)₂, LiN(CF₃SO₂)₂, LiN(CF₃CF₂SO₂)₂, LiPF₆, LiF, LiCl, LiBr, LiI, LiNO₃, LiClO₄, LiAlO₄, LiAlCl₄, LiSbF₆, LiAsF₆, LiBF₂C₂O₄, LiBC₄O₈, Li(CF₃)₂PF₄, Li(CF₃)₃PF₃, Li(CF₃)₄PF₂, Li(CF₃)₅PF, Li(CF₃)₆P, LiCF₃SO₃, LiC₄F₉SO₃, LiCF₃CF₂SO₃, LiCF₃CF₂(CF₃)₂CO, Li(CF₃SO₂)₂CH, LiCF₃(CF₂)₇SO₃, LiCF₃CO₂, LiCH₃CO₂, and combinations thereof.

The concentration of the lithium salt may be 0.1 M to 8.0 M, preferably 0.5 M to 5.0 M, more preferably, 1.0 M to 3.0 M, depending on various factors such as the exact composition of the electrolyte solution mixture, the solubility of the salt, the conductivity of the dissolved salt, the charging and discharging conditions of the battery, the operating temperature and other factors known in the lithium secondary battery field. If the concentration of the lithium salt is less than the above range, the conductivity of the electrolyte solution may be lowered and thus the performance of the electrolyte may be deteriorated. If the concentration of the lithium salt exceeds the above range, the viscosity of the electrolyte solution may increase and thus the mobility of the lithium ion (Li⁺) may be reduced. Therefore, it is preferable to select an appropriate concentration of lithium salt within the above range.

The positive electrode constituting the lithium-sulfur secondary battery according to the present invention generally comprises a positive electrode current collector and a positive electrode active material layer formed on the positive electrode current collector. The positive electrode active material layer comprises a positive electrode active material, an electrically conductive material and a binder.

The positive electrode current collector is not particularly limited as long as it has a high electrical conductivity without causing chemical changes in the battery, and for example, may be stainless steel, aluminum, nickel, titanium, sintered carbon, or aluminum or stainless steel surface-treated with carbon, nickel, titanium, silver, or the like. In addition, the positive electrode current collector may typically have a thickness of 3 *µ*m to 500 *µ*m, and may increase the adhesive force with the positive electrode active material by forming fine irregularities on the surface of the current collector. For example, the positive electrode current collector may be formed in various forms such as film, sheet, foil, net, porous body, foam, or nonwoven fabric.

The positive electrode active material is generally applied to a lithium-sulfur secondary battery, and includes, for example, elemental sulfur (S8) and sulfur-based compounds or mixtures thereof. Specifically, the sulfur-based compound may be Li₂Sₙ(n≥1), organosulfur compounds or sulfur-carbon compounds ((C₂Sₓ)ₙ: x=2.5 ~ 50, n≥2), etc. Since the element sulfur alone does not have electrical conductivity, it can be combined with a carbon material and used in the form of a sulfur-carbon composite.

The sulfur-carbon composite may have a particle size of 1*µ*m to 100*µ*m. If the particle size of the sulfur-carbon composite is less than 1*µ*m, there is a problem that the resistance between the particles increases and an overvoltage occurs in the electrode of the lithium-sulfur secondary battery. If the particle size exceeds 100 *µ*m, the surface area per unit weight is reduced, and thus the wetting area with the electrolyte in the electrode and the reaction site with the lithium ion are decreased, and the amount of electron transfer relative to the size of the composite is reduced, so that the reaction can be delayed, and as a result, the discharging capacity of the battery can be reduced.

In the sulfur-carbon composite, sulfur may be contained in the sulfur-carbon composite in an amount of 60 wt.% to 90 wt.%, preferably 70 wt.% to 80 wt.%, based on the total weight of the sulfur-carbon composite. If the sulfur is contained in the sulfur-carbon composite in an amount of less than 60 wt.%, there may be a problem that the energy density of the battery is decreased. If the sulfur is contained in the sulfur-carbon composite in an amount exceeding 90 wt.%, there may be a problem that the conductivity of the electrode is lowered and the functionality of the positive electrode active material is lowered.

The carbon material (or sulfur support material) constituting the sulfur-carbon composite has porosity, and in particular, since the carbon material used as the positive electrode active material of the present invention has characteristics of high specific surface area (3,000 m²/g or more) and high porosity (pore volume per unit weight: 0.7 to 3.0 cm³/g), it can support a large amount of sulfur.

The carbon material may be, for example, at least one selected from the group consisting of graphite; graphene; reduced graphene oxide (rGO); carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and activated carbon, and its shape may be in the form of sphere, rod, needle, plate, tube, or bulk.

The positive electrode active material may be contained in the positive electrode active material layer in an amount of 80 wt.% to 99 wt.%, preferably 85 wt.% to 95 wt.%, based on the total weight of the positive electrode active material layer. If the positive electrode active material is contained in the positive electrode active material layer in an amount of less than 80 wt.%, there may be a problem that the energy density of the battery is decreased. If the positive electrode active material is contained in the positive electrode active material layer in an amount exceeding 99 wt.%, there may be a problem that since the content of the binder is insufficient, the bonding force between the positive electrode active materials may be lowered, and since the content of the electrically conductive material is insufficient, the conductivity in the electrode is lowered.

The electrically conductive material is used for imparting conductivity to the electrode, and can be used without any particular limitation as long as it has electronic conductivity without causing chemical change in constituting the battery. Specific examples thereof may comprise graphite such as natural graphite or artificial graphite; carbon-based materials such as carbon black, acetylene black, Ketjen black, channel black, furnace black, lamp black, thermal black and carbon fiber; metal powders or metal fibers such as copper, nickel, aluminum, and silver; electrically conductive whiskers such as zinc oxide and potassium titanate; electrically conductive metal oxides such as titanium oxide; or electrically conductive polymers such as polyphenylene derivatives, and one of these or a mixture of two or more thereof may be used.

The electrically conductive material may be contained in the positive electrode active material layer in an amount of 0.1 wt.% to 15 wt.%, preferably 0.5 to 10 wt.%, based on the total weight of the positive electrode active material layer. If the electrically conductive material is contained in the positive electrode active material layer in an amount of less than 0.1 wt.%, there may be a problem that since the content of the electrically conductive material is insufficient, the conductivity in the electrode is reduced. If the electrically conductive material is contained in the positive electrode active material layer in an amount exceeding 15 wt.%, there may be a problem that since the amount of the positive electrode active material is relatively small, the discharging capacity and energy density of the battery are lowered.

The binder serves to improve the adhesion between the positive electrode active material particles and the adhesive force between the positive electrode active material and the current collector. Specific examples thereof may comprise polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, styrene-butadiene rubber(SBR), fluorine rubber, or various copolymers thereof, and one of these or a mixture of two or more thereof may be used.

The binder may be contained in the positive electrode active material layer in an amount of 0.1 wt.% to 15 wt.%, preferably 0.5 to 10 wt.%, based on the total weight of the positive electrode active material layer. If the binder is contained in the positive electrode active material layer in an amount of less than 0.1 wt.%, there may be a problem that since the content of the binder is insufficient, and the bonding force between the positive electrode active materials may be reduced. If the binder is contained in the positive electrode active material layer in an amount exceeding 15 wt.%, there may be a problem that since the amount of positive electrode active material is relatively small, the discharging capacity and energy density of the battery are reduced.

The positive electrode active material, the binder, the electrically conductive material and the like are dispersed and mixed in a dispersion medium (solvent) to form a slurry, and the slurry can be applied onto the positive electrode current collector, followed by drying and rolling it to prepare a positive electrode. The dispersion medium may be, but is not limited to, N-methyl-2-pyrrolidone (NMP), dimethyl formamide (DMF), dimethyl sulfoxide (DMSO), ethanol, isopropanol, water, or a mixture thereof.

The positive electrode of the lithium-sulfur secondary battery according to the present invention may have a lower porosity than the positive electrode of the general lithium-sulfur secondary battery in the related art. Here, the porosity is the ratio of the pore volume to the total volume of the positive electrode, and is usually expressed as a percentage. If the positive electrode of the general lithium-sulfur secondary battery has low porosity, since it may not be easy to move the material according to the penetration of the electrolyte, it is not able to properly implement the performance of the battery. Even if it were so, if the porosity of a positive electrode of a lithium-sulfur secondary battery is increased, it may be undesirable because the volume of the positive electrode is increased to load the same amount of a positive electrode active material. If the electrolyte according to the present invention is applied to a lithium-sulfur secondary battery, it may be more preferable because the performance of the battery can be properly implemented in a positive electrode having a high porosity as well as a positive electrode having a low porosity. According to one embodiment of the present invention, the positive electrode active material layer in the positive electrode has a porosity of 30% or more and less than 70%, preferably 50% to 65%, more preferably 55% to 65%. The porosity of less than 70% is lower than the porosity of the positive electrode active material layer of a typical lithium-sulfur secondary battery in the related art. If the performance of the battery can be properly implemented in the related porosity, there is an advantage that it is possible to reduce the volume of the positive electrode for loading the same amount of a positive electrode active material. The porosity can be measured by a method generally used in the related technical field. The porosity was calculated by measuring the thickness of the positive electrode active material layer through the equipment (TESA, u-hite) for measuring the thickness of a material, and then using the true density of the positive electrode active material layer measured through the equipment (Microtrac, BELPycno) for measuring the true density of a material.

The positive electrode of the lithium-sulfur secondary battery according to the present invention may have a higher loading amount of the positive electrode active material than the positive electrode of a general lithium-sulfur secondary battery in the related art. In general, if the loading amount of the positive electrode active material is increased, the volume of the positive electrode is inevitably increased. However, in the case of the lithium-sulfur secondary battery according to the present invention, since the porosity of the positive electrode can be lowered, as described above, it is possible to keep the loading of the positive electrode active material high even in a relatively small volume. According to one embodiment of the present invention, the positive electrode has a loading amount of the positive electrode active material of 3.0 mAh/cm² to 10.0 mAh/cm², preferably 3.5 mAh/cm² to 7.0 mAh/cm², more preferably 4.0 mAh/cm² to 7.0 mAh/cm². Theoretically, if the loading amount of the positive electrode active material is increased, it can help to improve the performance of the battery, but there is a limit to increasing the loading amount of the positive electrode active material due to the problem caused by the increase in the electrode volume and the difference between the theoretical discharging capacity and the actual discharging capacity. The loading amount of the positive electrode active material is calculated by dividing the theoretical discharging capacity (mAh) of the positive electrode active material loaded on the positive electrode by the area (cm²) of the surface where the positive electrode active material layer and the positive electrode current collector are in contact. For example, in the case of sulfur, it has a theoretical specific discharging capacity of 1,675 mAh/g, and the theoretical discharging capacity of sulfur can be calculated by multiplying the theoretical specific discharging capacity by the mass (g) of sulfur loaded on the positive electrode.

The negative electrode constituting the lithium-sulfur secondary battery according to the present invention comprises a negative electrode current collector and a negative electrode active material layer formed on the negative electrode current collector.

The negative electrode active material layer comprises a negative electrode active material, a binder, and an electrically conductive material. The negative electrode active material may be a material capable of reversibly intercalating or de-intercalating lithium ion (Li⁺), a material capable of reacting with lithium ion to reversibly form a lithium-containing compound, lithium metal, or a lithium alloy. The material capable of reversibly intercalating or de-intercalating lithium ion (Li⁺) may be, for example, crystalline carbon, amorphous carbon, or mixtures thereof. The material capable of reacting with lithium ion (Li⁺) to reversibly form a lithium-containing compound may be, for example, tin oxide, titanium nitrate, or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

The binder, the electrically conductive material, and the negative electrode current collector may be selected with reference to the configuration of the above-described positive electrode, but are not necessarily limited thereto. In addition, the method of forming the negative electrode active material layer on the negative electrode current collector is based on a known coating method as in the positive electrode, and is not particularly limited.

The separator for the lithium-sulfur secondary battery according to the present invention is a physical separator having a function of physically separating electrodes. The separator can be used without special restrictions, as long as it is used as a conventional separator. Particularly, a separator with excellent electrolyte solution humidification ability while exhibiting low resistance to ion migration of electrolyte solution is preferable. The separator enables the lithium ion to be transported between the positive electrode and the negative electrode while separating or insulating the positive electrode and the negative electrode from each other. Such separator may be made of a porous, nonconductive or insulating material having a porosity of 30 to 50%. Specifically, a porous polymer film, for example, a porous polymer film made of a polyolefin-based polymer such as ethylene homopolymer, propylene homopolymer, ethylene/butene copolymer, ethylene/hexene copolymer and ethylene/methacrylate copolymer, etc. may be used, and a nonwoven fabric made of glass fiber having high melting point or the like can be used. Among them, the porous polymer film is preferably used.

If the polymer film is used for both the buffer layer and the separator, the impregnation amount and ion conduction characteristics of the electrolyte solution are decreased and the effect of reducing the overvoltage and improving the capacity characteristics becomes insignificant. On the contrary, if the nonwoven fabric material is used for both the buffer layer and the separator, a mechanical stiffness cannot be ensured and thus a problem of short circuit of the battery occurs. However, if a film-type separator and a polymer nonwoven fabric buffer layer are used together, the mechanical strength can also be ensured together with the improvement effect of the battery performance due to the adoption of the buffer layer.

According to one embodiment of the present invention, the ethylene homopolymer (polyethylene) polymer film is used as a separator, and the polyimide nonwoven fabric is used as a buffer layer. In that case, it is preferable that the polyethylene polymer film has a thickness of 10 to 25 *µ*m and a porosity of 40 to 50%.

The lithium-sulfur secondary battery of the present invention can be manufactured by disposing a separator between a positive electrode and a negative electrode to form an electrode assembly and inserting the electrode assembly into a cylindrical battery case or a rectangular battery case, and then injecting an electrolyte. Alternatively, the lithium-sulfur secondary battery of the present invention can be manufactured by laminating the electrode assembly, impregnating the electrode assembly with the electrolyte, putting the obtained result into a battery case and then sealing it.

Hereinafter, preferred examples will be described in order to facilitate understanding of the present invention. However, the following examples are provided to facilitate understanding of the present invention, but the present invention is not limited thereto.

### Examples

### Example 1

To the solvent obtained by mixing dimethoxyethane (DME) and 1,1,2,2-tetrafluoroethyl 2,2,3,3-tetrafluoropropyl ether (TTE) in a 3:7 volume ratio, lithium bis(trifluoromethanesulfonyl)imide (LiTFSI, LiN(CF₃SO₂)₂) was added at a concentration of 1.0M and mixed, and then 500 ppm of ethylene sulfite was added to the mixture to prepare an electrolyte for a lithium-sulfur secondary battery.

90 parts by weight of sulfur-carbon composite (S:C=75:25 weight ratio) (in the sulfur-carbon composite, activated carbon with a pore volume of 1.8 cm³/g was used) as a positive electrode active material, 5 parts by weight of Denka Black as an electrically conductive material and 5 parts by weight of styrene butadiene rubber/carboxymethyl cellulose (SBR:CMC=7:3) as a binder were mixed to prepare a slurry composition for a positive electrode. The prepared slurry composition was coated on a current collector of aluminum foil, dried at 50°C for 12 hours, and compressed with a roll press device to prepare a positive electrode (at this time, the loading amount was 4.0 mAh/cm², and the porosity of the positive electrode active material layer in the positive electrode was 65%).

The prepared positive electrode and the lithium metal negative electrode having a thickness of 60 *µ*m were placed to face each other, and a polyethylene (PE) separator was interposed between them, and then the prepared electrolyte was injected to manufacture a coin cell type lithium-sulfur secondary battery. Meanwhile, in the manufacture of the lithium-sulfur secondary battery, the positive electrode was punched out and used as a 14 phi circular electrode, the polyethylene separator was punched out and used as a 19 phi separator, the lithium metal was punched out and used as a 16 phi negative electrode.

### Comparative Example 1

A lithium-sulfur secondary battery was prepared in the same manner as in Example 1, except that when manufacturing the electrolyte, ethylene sulfite was not added.

### Comparative Example 2

A lithium-sulfur secondary battery was prepared in the same manner as in Example 1, except that when manufacturing the electrolyte, 5,000 ppm of ethylene sulfite was added.

### Comparative Example 3

A lithium secondary battery was prepared in the same manner as in Example 1, except that when manufacturing the positive electrode, it was manufactured by the following method.

90 parts by weight of LiNi_{0.6}Co_{0.2}Mn_{0.2}O₂ (NCM 622) as a positive electrode active material, 5 parts by weight of Super-P as an electrically conductive material and 5 parts by weight of a polyvinylidene fluoride (PVDF) binder as a binder were mixed to prepare a slurry composition for a positive electrode. The prepared slurry composition was coated on a current collector of aluminum foil, dried at 50°C for 12 hours, and compressed with a roll press device to prepare a positive electrode (at this time, the loading amount was 3.0 mAh/cm², and the porosity of the positive electrode active material layer in the positive electrode was 30%).

### Comparative Example 4

A lithium secondary battery was prepared in the same way as in Comparative Example 3, except that when preparing the electrolyte, ethylene sulfite was not added.

### Comparative Example 5

A lithium secondary battery was prepared in the same way as in Comparative Example 3, except that when preparing the electrolyte, 5,000 ppm of ethylene sulfite was added.

### Comparative Example 6

A lithium secondary battery was prepared in the same way as in Comparative Example 3, except that when preparing the electrolyte, it was prepared by the following method.

To the solvent obtained by mixing ethylene carbonate (EC) and ethylmethyl carbonate (EMC) in a 3:7 volume ratio, lithium hexafluorophosphate (LiPF₆) was added at a concentration of 1.0M and mixed, and then 500 ppm of ethylene sulfite was added to the mixture to prepare an electrolyte for a lithium secondary battery.

### Comparative Example 7

A lithium secondary battery was prepared in the same way as in Comparative Example 6, except that when preparing the electrolyte, ethylene sulfite was not added.

### Comparative Example 8

A lithium secondary battery was prepared in the same way as in Comparative Example 6, except that when preparing the electrolyte, 5,000 ppm of ethylene sulfite was added.

### Example 2

A lithium-sulfur secondary battery was prepared in the same manner as in Example 1, except that when preparing the electrolyte, 1,3-propane sultone was added instead of ethylene sulfite.

### Comparative Example 9

A lithium-sulfur secondary battery was prepared in the same manner as in Example 2, except that when preparing the electrolyte, 1,3-propane sultone was not added.

### Comparative Example 10

A lithium-sulfur secondary battery was prepared in the same manner as in Example 2, except that when preparing the electrolyte, 5,000 ppm of 1,3-propane sultone was added.

### Comparative Example 11

A lithium secondary battery was prepared in the same way as in Example 2, except that when manufacturing the positive electrode, it was prepared by the following method.

90 parts by weight of LiNi_{0.6}Co_{0.2}Mn_{0.2}O₂ (NCM 622) as a positive electrode active material, 5 parts by weight of Super-P as an electrically conductive material and 5 parts by weight of a polyvinylidene fluoride (PVDF) binder as a binder were mixed to prepare a slurry composition for a positive electrode. The prepared slurry composition was coated on a current collector of aluminum foil, dried at 50°C for 12 hours, and compressed with a roll press device to prepare a positive electrode (at this time, the loading amount was 3.0 mAh/cm², and the porosity of the positive electrode active material layer in the positive electrode was 30%).

### Comparative Example 12

A lithium secondary battery was prepared in the same way as in Comparative Example 11, except that when preparing the electrolyte, 1,3-propane sultone was not added.

### Comparative Example 13

A lithium secondary battery was prepared in the same manner as in Comparative Example 11, except that when preparing the electrolyte, 5,000 ppm of 1,3-propane sultone was added.

### Comparative Example 14

A lithium secondary battery was prepared in the same way as in Comparative Example 11, except that when preparing the electrolyte, it was prepared by the following method.

To the solvent obtained by mixing ethylene carbonate (EC) and ethylmethyl carbonate (EMC) in a 3:7 volume ratio, lithium hexafluorophosphate (LiPF₆) was added at a concentration of 1.0M and mixed, and then 500 ppm of 1,3-propane sultone was added to the mixture to prepare an electrolyte for a lithium secondary battery.

### Comparative Example 15

A lithium secondary battery was prepared in the same way as in Comparative Example 14, except that when preparing the electrolyte, 1,3-propane sultone was not added.

### Comparative Example 16

A lithium secondary battery was prepared in the same manner as in Comparative Example 14, except that when preparing the electrolyte, 5,000 ppm of 1,3-propane sultone was added.

### Example 3

A lithium-sulfur secondary battery was prepared in the same manner as in Example 1, except that when preparing the electrolyte, 1,3-propene sultone was added instead of ethylene sulfite.

### Comparative Example 17

A lithium-sulfur secondary battery was prepared in the same manner as in Example 3, except that when preparing the electrolyte, 1,3-propene sultone was not added.

### Comparative Example 18

A lithium-sulfur secondary battery was prepared in the same manner as in Example 3, except that when preparing the electrolyte, 5,000 ppm of 1,3-propene sultone was added.

### Comparative Example 19

A lithium secondary battery was prepared in the same way as in Example 3, except that when manufacturing the positive electrode, it was prepared by the following method.

90 parts by weight of LiNi_{0.6}Co_{0.2}Mn_{0.2}O₂ (NCM 622) as a positive electrode active material, 5 parts by weight of Super-P as an electrically conductive material and 5 parts by weight of a polyvinylidene fluoride (PVDF) binder as a binder were mixed to prepare a slurry composition for a positive electrode. The prepared slurry composition was coated on a current collector of aluminum foil, dried at 50°C for 12 hours, and compressed with a roll press device to prepare a positive electrode (at this time, the loading amount was 3.0 mAh/cm², and the porosity of the positive electrode active material layer in the positive electrode was 30%).

### Comparative Example 20

A lithium secondary battery was prepared in the same way as in Comparative Example 19, except that when preparing the electrolyte, 1,3-propene sultone was not added.

### Comparative Example 21

A lithium secondary battery was prepared in the same manner as in Comparative Example 19, except that when preparing the electrolyte, 5,000 ppm of 1,3-propene sultone was added.

### Comparative Example 22

A lithium secondary battery was prepared in the same way as in Comparative Example 19, except that when preparing the electrolyte, it was prepared by the following method.

To the solvent obtained by mixing ethylene carbonate (EC) and ethylmethyl carbonate (EMC) in a 3:7 volume ratio, lithium hexafluorophosphate (LiPF₆) was added at a concentration of 1.0M and mixed, and then 500 ppm of 1,3-propene sultone was added to the mixture to prepare an electrolyte for a lithium secondary battery.

### Comparative Example 23

A lithium secondary battery was prepared in the same way as in Comparative Example 22, except that when preparing the electrolyte, 1,3-propene sultone was not added.

### Comparative Example 24

A lithium secondary battery was prepared in the same manner as in Comparative Example 22, except that when preparing the electrolyte, 5,000 ppm of 1,3-propene sultone was added.

### Example 4

A lithium-sulfur secondary battery was prepared in the same manner as in Example 1, except that when preparing the electrolyte, ethylene sulfate was added instead of ethylene sulfite.

### Comparative Example 25

A lithium-sulfur secondary battery was prepared in the same manner as in Example 4, except that when preparing the electrolyte, ethylene sulfate was not added.

### Comparative Example 26

A lithium-sulfur secondary battery was prepared in the same manner as in Example 4, except that when preparing the electrolyte, 5,000 ppm of ethylene sulfate was added.

### Comparative Example 27

A lithium secondary battery was prepared in the same way as in Example 4, except that when manufacturing the positive electrode, it was prepared by the following method.

90 parts by weight of LiNi_{0.6}Co_{0.2}Mn_{0.2}O₂ (NCM 622) as a positive electrode active material, 5 parts by weight of Super-P as an electrically conductive material and 5 parts by weight of a polyvinylidene fluoride (PVDF) binder as a binder were mixed to prepare a slurry composition for a positive electrode. The prepared slurry composition was coated on a current collector of aluminum foil, dried at 50°C for 12 hours, and compressed with a roll press device to prepare a positive electrode (at this time, the loading amount was 3.0 mAh/cm², and the porosity of the positive electrode active material layer in the positive electrode was 30%).

### Comparative Example 28

A lithium secondary battery was prepared in the same way as in Comparative Example 27, except that when preparing the electrolyte, ethylene sulfate was not added.

### Comparative Example 29

A lithium secondary battery was prepared in the same manner as in Comparative Example 27, except that when preparing the electrolyte, 5,000 ppm of ethylene sulfate was added.

### Comparative Example 30

A lithium secondary battery was prepared in the same way as in Comparative Example 27, except that when preparing the electrolyte, it was prepared by the following method.

To the solvent obtained by mixing ethylene carbonate (EC) and ethylmethyl carbonate (EMC) in a 3:7 volume ratio, lithium hexafluorophosphate (LiPF₆) was added at a concentration of 1.0M and mixed, and then 500 ppm of ethylene sulfate was added to the mixture to prepare an electrolyte for a lithium secondary battery.

### Comparative Example 31

A lithium secondary battery was prepared in the same way as in Comparative Example 30, except that when preparing the electrolyte, ethylene sulfate was not added.

### Comparative Example 32

A lithium secondary battery was prepared in the same manner as in Comparative Example 30, except that when preparing the electrolyte, 5,000 ppm of ethylene sulfate was added.

### Experimental Example: Evaluation of the cycle performance of the manufactured battery

### Experimental Example 1: Evaluation for ethylene sulfite

The lithium-sulfur secondary battery manufactured in Example 1 and the lithium secondary batteries manufactured in Comparative Examples 1 to 8 were charged and discharged at a rate of 0.3C to evaluate the cycle performance of the batteries. The voltage ranges for charging and discharging were set to 1.0~3.6V for the lithium-sulfur secondary battery and 2.7~4.4V for the lithium secondary batteries in consideration of the optimal conditions depending on the type of batteries, and the cycle performance of the battery was evaluated under a temperature condition of 25°C. The cycle performance of the battery was evaluated by the number of cycles when it exhibited a discharging capacity of 80% or more based on the initial discharging capacity, and when the number of related cycles was exceeded, the discharging capacity was dropped to less than 80% based on the initial discharging capacity. The evaluation results are shown in Table 1 below.

**Table 1:**

| | Number of cycles |
|---|---|
| Example 1 | 74 |
| Comparative Example 1 | 50 |
| Comparative Example 2 | 36 |
| Comparative Example 3 | 20 |
| Comparative Example 4 | 21 |
| Comparative Example 5 | 23 |
| Comparative Example 6 | 51 |
| Comparative Example 7 | 50 |
| Comparative Example 8 | 47 |

According to Table 1 above, it was confirmed that when 500 ppm of ethylene sulfite was added to the electrolyte of the lithium-sulfur secondary battery (Example 1), cycle performance was significantly improved compared to the case where ethylene sulfite was not added (Comparative Example 1). However, it was confirmed that when 5,000 ppm of ethylene sulfite was added to the electrolyte of the lithium-sulfur secondary battery (Comparative Example 2), the effect of the addition of ethylene sulfite was not observed, and rather, the cycle performance was lowered compared to the case where ethylene sulfite is not added (Comparative Example 1).

In addition, in the case of the lithium secondary battery that uses lithium metal oxide (NCM 622), not sulfur-carbon composite, as a positive electrode active material, as the cycles of the battery were proceeded, the ether-based solvent may be decomposed in the electrolyte containing the ether-based solvent, and thus cycle performance was generally measured to be low. Unlike the lithium-sulfur secondary battery, in the case of the lithium secondary battery, the cycle performance was not particularly improved, compared to the case where 500 ppm of ethylene sulfite was added to the electrolyte (Comparative Example 3), the case where ethylene sulfite was not added (Comparative Example 4) and the case where 5,000 ppm of ethylene sulfite was added (Comparative Example 5).

In order to confirm whether the results of Comparative Examples 3 to 5 are due to the problem of the solvent of the electrolyte, additional experiments were conducted using an electrolyte containing a carbonate-based solvent suitable for a lithium secondary battery using lithium metal oxide (NCM 622) as a positive electrode active material. In the electrolyte containing the carbonate-based solvent, the carbonate-based solvent was hardly decomposed even when the cycles were proceeded, and thus the cycle performance was generally similar to that of the lithium-sulfur secondary battery. However, even in the case of the lithium secondary battery using the electrolyte containing the carbonate-based solvent (Comparative Examples 6 to 8), the cycle performance was not particularly improved in the lithium secondary battery, as in the case of the lithium secondary battery using the electrolyte containing the ether-based solvent (Comparative Examples 3 to 5), compared to the case where 500 ppm of ethylene sulfite was added to the electrolyte (Comparative Example 6), the case where ethylene sulfite was not added (Comparative Example 7), and the case where 5,000 ppm of ethylene sulfite was added (Comparative Example 8).

### Experimental Example 2: Evaluation for 1,3-propane sultone

The lithium-sulfur secondary battery manufactured in Example 2 and the lithium secondary batteries manufactured in Comparative Examples 9 to 16 were charged and discharged at a rate of 0.3C to evaluate the cycle performance of the batteries. The voltage ranges for charging and discharging were set to 1.0~3.6V for the lithium-sulfur secondary battery and 2.7~4.4V for the lithium secondary batteries in consideration of the optimal conditions depending on the type of batteries, and the cycle performance of the battery was evaluated under a temperature condition of 25°C. The cycle performance of the battery was evaluated by the number of cycles when it exhibited a discharging capacity of 80% or more based on the initial discharging capacity, and when the number of related cycles was exceeded, the discharging capacity was dropped to less than 80% based on the initial discharging capacity. The evaluation results are shown in Table 2 below.

**Table 2:**

| | Number of cycles |
|---|---|
| Example 2 | 73 |
| Comparative Example 9 | 50 |
| Comparative Example 10 | 43 |
| Comparative Example 11 | 20 |
| Comparative Example 12 | 22 |
| Comparative Example 13 | 25 |
| Comparative Example 14 | 49 |
| Comparative Example 15 | 50 |
| Comparative Example 16 | 47 |

According to Table 2 above, it was confirmed that when 500 ppm of 1,3-propane sultone was added to the electrolyte of the lithium-sulfur secondary battery (Example 2), cycle performance was significantly improved compared to the case where 1,3-propane sultone was not added (Comparative Example 9). However, it was confirmed that when 5,000 ppm of 1,3-propane sultone was added to the electrolyte of the lithium-sulfur secondary battery (Comparative Example 10), the effect of the addition of 1,3-propane sultone was not observed, and rather, the cycle performance was lowered compared to the case where 1,3-propane sultone is not added (Comparative Example 9).

In addition, in the case of the lithium secondary battery that uses lithium metal oxide (NCM 622), not sulfur-carbon composite, as a positive electrode active material, as the cycles of the battery were proceeded, the ether-based solvent may be decomposed in the electrolyte containing the ether-based solvent, and thus cycle performance was generally measured to be low. Unlike the lithium-sulfur secondary battery, in the case of the lithium secondary battery, the cycle performance was not particularly improved, compared to the case where 500 ppm of 1,3-propane sultone was added to the electrolyte (Comparative Example 11), the case where 1,3-propane sultone was not added (Comparative Example 12) and the case where 5,000 ppm of 1,3-propane sultone was added (Comparative Example 13).

In order to confirm whether the results of Comparative Examples 11 to 13 are due to the problem of the solvent of the electrolyte, additional experiments were conducted using an electrolyte containing a carbonate-based solvent suitable for a lithium secondary battery using lithium metal oxide (NCM 622) as a positive electrode active material. In the electrolyte containing the carbonate-based solvent, the carbonate-based solvent was hardly decomposed even when the cycles were proceeded, and thus the cycle performance was generally similar to that of the lithium-sulfur secondary battery. However, even in the case of the lithium secondary battery using the electrolyte containing the carbonate-based solvent (Comparative Examples 14 to 16), the cycle performance was not particularly improved in the lithium secondary battery, as in the case of the lithium secondary battery using the electrolyte containing the ether-based solvent (Comparative Examples 11 to 13), compared to the case where 500 ppm of 1,3-propane sultone was added to the electrolyte (Comparative Example 14), the case where 1,3-propane sultone was not added (Comparative Example 15), and the case where 5,000 ppm of 1,3-propane sultone was added (Comparative Example 16).

### Experimental Example 3: Evaluation for 1,3-propene sultone

The lithium-sulfur secondary battery manufactured in Example 3 and the lithium secondary batteries manufactured in Comparative Examples 17 to 24 were charged and discharged at a rate of 0.3C to evaluate the cycle performance of the batteries. The voltage ranges for charging and discharging were set to 1.0~3.6V for the lithium-sulfur secondary battery and 2.7~4.4V for the lithium secondary batteries in consideration of the optimal conditions depending on the type of batteries, and the cycle performance of the battery was evaluated under a temperature condition of 25°C. The cycle performance of the battery was evaluated by the number of cycles when it exhibited a discharging capacity of 80% or more based on the initial discharging capacity, and when the number of related cycles was exceeded, the discharging capacity was dropped to less than 80% based on the initial discharging capacity. The evaluation results are shown in Table 3 below.

**Table 3:**

| | Number of cycles |
|---|---|
| Example 3 | 71 |
| Comparative Example 17 | 50 |
| Comparative Example 18 | 48 |
| Comparative Example 19 | 20 |
| Comparative Example 20 | 19 |
| Comparative Example 21 | 18 |
| Comparative Example 22 | 50 |
| Comparative Example 23 | 50 |
| Comparative Example 24 | 48 |

According to Table 3 above, it was confirmed that when 500 ppm of 1,3-propene sultone was added to the electrolyte of the lithium-sulfur secondary battery (Example 3), cycle performance was significantly improved compared to the case where 1,3-propene sultone was not added (Comparative Example 17). However, it was confirmed that when 5,000 ppm of 1,3-propene sultone was added to the electrolyte of the lithium-sulfur secondary battery (Comparative Example 18), the effect of the addition of 1,3-propene sultone was not observed, and rather, the cycle performance was lowered compared to the case where 1,3-propene sultone is not added (Comparative Example 17).

In addition, in the case of the lithium secondary battery that uses lithium metal oxide (NCM 622), not sulfur-carbon composite, as a positive electrode active material, as the cycles of the battery were proceeded, the ether-based solvent may be decomposed in the electrolyte containing the ether-based solvent, and thus cycle performance was generally measured to be low. Unlike the lithium-sulfur secondary battery, in the case of the lithium secondary battery, the cycle performance was not particularly improved, compared to the case where 500 ppm of 1,3-propene sultone was added to the electrolyte (Comparative Example 19), the case where 1,3-propene sultone was not added (Comparative Example 20) and the case where 5,000 ppm of 1,3-propene sultone was added (Comparative Example 21).

In order to confirm whether the results of Comparative Examples 19 to 21 are due to the problem of the solvent of the electrolyte, additional experiments were conducted using an electrolyte containing a carbonate-based solvent suitable for a lithium secondary battery using lithium metal oxide (NCM 622) as a positive electrode active material. In the electrolyte containing the carbonate-based solvent, the carbonate-based solvent was hardly decomposed even when the cycles were proceeded, and thus the cycle performance was generally similar to that of the lithium-sulfur secondary battery. However, even in the case of the lithium secondary battery using the electrolyte containing the carbonate-based solvent (Comparative Examples 22 to 24), the cycle performance was not particularly improved in the lithium secondary battery, as in the case of the lithium secondary battery using the electrolyte containing the ether-based solvent (Comparative Examples 19 to 21), compared to the case where 500 ppm of 1,3-propene sultone was added to the electrolyte (Comparative Example 22), the case where 1,3-propene sultone was not added (Comparative Example 23), and the case where 5,000 ppm of 1,3-propene sultone was added (Comparative Example 24).

### Experimental Example 4: Evaluation for ethylene sulfate

The lithium-sulfur secondary battery manufactured in Example 4 and the lithium secondary batteries manufactured in Comparative Examples 25 to 32 were charged and discharged at a rate of 0.3C to evaluate the cycle performance of the batteries. The voltage ranges for charging and discharging were set to 1.0~3.6V for the lithium-sulfur secondary battery and 2.7~4.4V for the lithium secondary batteries in consideration of the optimal conditions depending on the type of batteries, and the cycle performance of the battery was evaluated under a temperature condition of 25°C. The cycle performance of the battery was evaluated by the number of cycles when it exhibited a discharging capacity of 80% or more based on the initial discharging capacity, and when the number of related cycles was exceeded, the discharging capacity was dropped to less than 80% based on the initial discharging capacity. The evaluation results are shown in Table 4 below.

**Table 4:**

| | Number of cycles |
|---|---|
| Example 4 | 73 |
| Comparative Example 25 | 50 |
| Comparative Example 26 | 40 |
| Comparative Example 27 | 20 |
| Comparative Example 28 | 20 |
| Comparative Example 29 | 17 |
| Comparative Example 30 | 48 |
| Comparative Example 31 | 50 |
| Comparative Example 32 | 45 |

According to Table 4 above, it was confirmed that when 500 ppm of ethylene sulfate was added to the electrolyte of the lithium-sulfur secondary battery (Example 4), cycle performance was significantly improved compared to the case where ethylene sulfate was not added (Comparative Example 25). However, it was confirmed that when 5,000 ppm of ethylene sulfate was added to the electrolyte of the lithium-sulfur secondary battery (Comparative Example 26), the effect of the addition of ethylene sulfate was not observed, and rather, the cycle performance was lowered compared to the case where ethylene sulfate is not added (Comparative Example 25).

In addition, in the case of the lithium secondary battery that uses lithium metal oxide (NCM 622), not sulfur-carbon composite, as a positive electrode active material, as the cycles of the battery were proceeded, the ether-based solvent may be decomposed in the electrolyte containing the ether-based solvent, and thus cycle performance was generally measured to be low. Unlike the lithium-sulfur secondary battery, in the case of the lithium secondary battery, the cycle performance was not particularly improved, compared to the case where 500 ppm of ethylene sulfate was added to the electrolyte (Comparative Example 27), the case where ethylene sulfate was not added (Comparative Example 28) and the case where 5,000 ppm of ethylene sulfate was added (Comparative Example 29).

In order to confirm whether the results of Comparative Examples 27 to 29 are due to the problem of the solvent of the electrolyte, additional experiments were conducted using an electrolyte containing a carbonate-based solvent suitable for a lithium secondary battery using lithium metal oxide (NCM 622) as a positive electrode active material. In the electrolyte containing the carbonate-based solvent, the carbonate-based solvent was hardly decomposed even when the cycles were proceeded, and thus the cycle performance was generally similar to that of the lithium-sulfur secondary battery. However, even in the case of the lithium secondary battery using the electrolyte containing the carbonate-based solvent (Comparative Examples 30 to 32), the cycle performance was not particularly improved in the lithium secondary battery, as in the case of the lithium secondary battery using the electrolyte containing the ether-based solvent (Comparative Examples 27 to 29), compared to the case where 500 ppm of ethylene sulfate was added to the electrolyte (Comparative Example 30), the case where ethylene sulfate was not added (Comparative Example 31), and the case where 5,000 ppm of ethylene sulfate was added (Comparative Example 32).

## Claims

1. A lithium-sulfur secondary battery comprising a positive electrode, a negative electrode, a separator, and an electrolyte,
wherein the electrolyte contains a S-O-based cyclic compound, and the S-O-based cyclic compound is ethylene sulfite, 1,3-propane sultone, 1,3-propene sultone, ethylene sulfate, or a combination thereof,
**characterized in that**
the S-O-based cyclic compound is contained in the electrolyte in an amount exceeding 0 ppm and less than 1,000 ppm based on the total weight of the electrolyte.

2. The lithium-sulfur secondary battery according to claim 1, wherein the electrolyte further contains a non-aqueous solvent and lithium salt, and the non-aqueous solvent comprises a fluorinated linear ether.

3. The lithium-sulfur secondary battery according to claim 2, wherein the fluorinated linear ether is selected from the group consisting of 1,1,2,2-tetrafluoroethyl 2,2,3,3-tetrafluoropropyl ether, 1,1,2,2-tetrafluoroethyl 2,2,2-trifluoroethyl ether, bis(fluoromethyl) ether, bis(2,2,2-trifluoroethyl) ether, propyl 1,1,2,2-tetrafluoroethyl ether, isopropyl 1,1,2,2-tetrafluoroethyl ether, 1,1,2,2-tetrafluoroethyl isobutyl ether, 1,1,2,3,3,3-hexafluoropropyl ethyl ether, 1H,1H,2'H,3H-decafluorodipropyl ether, 1H,1H,2'H-perfluorodipropyl ether, and combinations thereof.

4. The lithium-sulfur secondary battery according to claim 2, wherein the non-aqueous solvent comprises 50 wt.% to 99 wt.% of the fluorinated linear ether based on the total weight of the non-aqueous solvent.

5. The lithium-sulfur secondary battery according to claim 2, wherein the lithium salt is selected from the group consisting of LiN(FSO₂)₂, LiSCN, LiN(CN)₂, LiN(CF₃SO₂)₂, LiN(CF₃CF₂SO₂)₂, LiPF₆, LiF, LiCl, LiBr, LiI, LiNO₃, LiClO₄ LiAlO₄, LiAlCl₄, LiSbF₆, LiAsF₆, LiBF₂C₂O₄, LiBC₄O₈, Li(CF₃)₂PF₄, Li(CF₃)₃PF₃, Li(CF₃)₄PF₂, Li(CF₃)₅PF, Li(CF₃)₆P, LiCF₃SO₃, LiC₄F₉SO₃, LiCF₃CF₂SO₃, LiCF₃CF₂(CF₃)₂CO, Li(CF₃SO₂)₂CH, LiCF₃(CF₂)₇SO₃, LiCF₃CO₂, LiCH₃CO₂, and combinations thereof.

6. The lithium-sulfur secondary battery according to claim 1, wherein the positive electrode comprises a positive electrode active material layer, and the positive electrode active material layer has a porosity of 30% or more and less than 70%.

7. The lithium-sulfur secondary battery according to claim 1, wherein the positive electrode has a loading amount of the positive electrode active material of 3.0 mAh/cm² to 10.0 mAh/cm².

8. The lithium-sulfur secondary battery according to claim 1, wherein the positive electrode comprises a sulfur-carbon composite as a positive electrode active material.

9. The lithium-sulfur secondary battery according to claim 8, wherein the sulfur-carbon composite comprises 60 wt.% to 90 wt.% of sulfur based on the total weight of the sulfur-carbon composite.

10. The lithium-sulfur secondary battery according to claim 2, wherein the non-aqueous solvent further comprises a non-fluorinated linear ether, a cyclic ether, a polyether, or a mixture thereof.

## Patentansprüche

1. Lithium-Schwefel-Sekundärbatterie, umfassend eine positive Elektrode, eine negative Elektrode, einen Separator und einen Elektrolyten,
wobei der Elektrolyt eine S-O-basierte zyklische Verbindung enthält und die S-O-basierte zyklische Verbindung Ethylensulfit, 1,3-Propansulton, 1,3-Propensulton, Ethylensulfat oder eine Kombination davon ist,
**dadurch gekennzeichnet, dass**
die S-O-basierte zyklische Verbindung in dem Elektrolyten in einer Menge von mehr als 0 ppm und weniger als 1.000 ppm, bezogen auf das Gesamtgewicht des Elektrolyten, enthalten ist.

2. Lithium-Schwefel-Sekundärbatterie nach Anspruch 1, wobei der Elektrolyt ferner ein nichtwässriges Lösungsmittel und Lithiumsalz enthält und das nichtwässrige Lösungsmittel einen fluorierten linearen Ether umfasst.

3. Lithium-Schwefel-Sekundärbatterie nach Anspruch 2, wobei der fluorierte lineare Ether ausgewählt ist aus der Gruppe bestehend aus 1,1,2,2-Tetrafluorethyl-2,2,3,3-tetrafluorpropylether, 1,1,2,2-Tetrafluorethyl-2,2,2-trifluorethylether, Bis(fluormethyl)ether, Bis(2,2,2-trifluorethyl)ether, Propyl-1,1,2,2-tetrafluorethylether, Isopropyl-1,1,2,2-tetrafluorethylether, 1,1,2,2-Tetrafluorethylisobutylether, 1,1,2,3,3,3-Hexafluorpropylethylether, 1H,1H,2'H,3H-Decafluordipropylether, 1H,1H,2'H-Perfluordipropylether und Kombinationen davon.

4. Lithium-Schwefel-Sekundärbatterie nach Anspruch 2, wobei das nichtwässrige Lösungsmittel 50 Gew.-% bis 99 Gew.-% des fluorierten linearen Ethers, bezogen auf das Gesamtgewicht des nichtwässrigen Lösungsmittels, umfasst.

5. Lithium-Schwefel-Sekundärbatterie nach Anspruch 2, wobei das Lithiumsalz ausgewählt ist aus der Gruppe bestehend aus LiN(FSO₂)₂, LiSCN, LiN(CN)₂, LiN(CF₃SO₂)₂, LiN(CF₃CF₂SO₂)₂, LiPF₆, LiF, LiCl, LiBr, LiI, LiNO₃, LiClO₄, LiAlO₄, LiAlCl₄, LiSbF₆, LiAsF₆, LiBF₂C₂O₄, LiBC₄O₈, Li(CF₃)₂PF₄, Li(CF₃)₃PF₃, Li(CF₃)₄PF₂, Li(CF₃)₅PF, Li(CF₃)₆P, LiCF₃SO₃, LiC₄F₉SO₃, LiCF₃CF₂SO₃, LiCF₃CF₂(CF₃)₂CO, Li(CF₃SO₂)₂CH, LiCF₃(CF₂)₇SO₃, LiCF₃CO₂, LiCH₃CO₂ und Kombinationen davon.

6. Lithium-Schwefel-Sekundärbatterie nach Anspruch 1, wobei die positive Elektrode eine Positivelektrodenaktivmaterialschicht umfasst und die Positivelektrodenaktivmaterialschicht eine Porosität von 30 % oder mehr und weniger als 70 % aufweist.

7. Lithium-Schwefel-Sekundärbatterie nach Anspruch 1, wobei die positive Elektrode eine Ladungsmenge des Positivelektrodenaktivmaterials von 3,0 mAh/cm² bis 10,0 mAh/cm² aufweist.

8. Lithium-Schwefel-Sekundärbatterie nach Anspruch 1, wobei die positive Elektrode einen Schwefel-Kohlenstoff-Verbundstoff als ein Positivelektrodenaktivmaterial umfasst.

9. Lithium-Schwefel-Sekundärbatterie nach Anspruch 8, wobei der Schwefel-Kohlenstoff-Verbundstoff 60 Gew.-% bis 90 Gew.-% Schwefel, bezogen auf das Gesamtgewicht des Schwefel-Kohlenstoff-Verbundstoffs, umfasst.

10. Lithium-Schwefel-Sekundärbatterie nach Anspruch 2, wobei das nichtwässrige Lösungsmittel ferner einen nichtfluorierten linearen Ether, einen zyklischen Ether, einen Polyether oder eine Mischung davon umfasst.

## Revendications

1. Batterie rechargeable au lithium-soufre comprenant une électrode positive, une électrode négative, un séparateur et un électrolyte,
dans laquelle l'électrolyte contient un composé cyclique à base de S-O, et le composé cyclique à base de S-O est du sulfite d'éthylène, 1,3-propane sultone, 1,3-propène sultone, sulfate d'éthylène, ou une combinaison de ces derniers,
**caractérisé en ce que**
le composé cyclique à base de S-O est contenu dans l'électrolyte dans une quantité supérieure à 0 ppm et inférieure à 1000 ppm sur la base du poids total de l'électrolyte.

2. Batterie rechargeable au lithium-soufre selon la revendication 1, dans laquelle l'électrolyte contient en outre un solvant non aqueux et un sel de lithium, et le solvant non aqueux contient un éther linéaire fluoré.

3. Batterie rechargeable au lithium-soufre selon la revendication 2, dans laquelle l'éther linéaire fluoré est sélectionné dans le groupe constitué d'un éther 1,1,2,2-tétrafluoroéthylique 2,2,3,3-tétrafluoropropylique, éther 1,1,2,2-tétrafluoroéthylique 2,2,2-trifluoroéthylique, éther bis(fluorométhylique), éther bis(2,2,2-trifluoroéthylique), éther propylique 1,1,2,2-tétrafluoroéthylique, éther isopropylique 1,1,2,2-tétrafluoroéthylique, éther 1,1,2,2-tétrafluoroéthylique isobutylique, éther 1,1,2,3,3,3-hexafluoropropylique éthylique, éther 1H,1H,2'H,3H-décafluorodipropylique, éther 1H,1H,2'H-perfluorodipropylique, et des combinaisons de ces derniers.

4. Batterie rechargeable au lithium-soufre selon la revendication 2, dans laquelle le solvant non aqueux comprend 50 % en poids à 99 % en poids de l'éther linéaire fluoré sur la base du poids total du solvant non aqueux.

5. Batterie rechargeable au lithium-soufre selon la revendication 2, dans laquelle le sel de lithium est sélectionné dans le groupe constitué de LiN(FSO₂)₂, LiSCN, LiN(CN)₂, LiN(CF₃SO₂)₂, LiN(CF₃CF₂SO₂)₂, LiPF₆, LiF, LiCl, LiBr, LiI, LiNO₃, LiClO₄, LiAlO₄, LiAlCl₄, LiSbF₆, LiAsF₆, LiBF₂C₂O₄, LiBC₄O₈, Li(CF₃)₂PF₄, Li(CF₃)₃PF₃, Li(CF₃)₄PF₂, Li(CF₃)₅PF, Li(CF₃)₆P, LiCF₃SO₃, LiC₄F₉SO₃, LiCF₃CF₂SO₃, LiCF₃CF₂(CF₃)₂CO, Li(CF₃SO₂)₂CH, LiCF₃(CF₂)₇SO₃, LiCF₃CO₂, LiCH₃CO_{2,} et des combinaisons de ces derniers.

6. Batterie rechargeable au lithium-soufre selon la revendication 1, dans laquelle l'électrode positive comprend une couche de matériau actif d'électrode positive, et la couche de matériau actif d'électrode positive a une porosité égale ou supérieure à 30 % et inférieure à 70 %.

7. Batterie rechargeable au lithium-soufre selon la revendication 1, dans laquelle l'électrode positive a une quantité de charge du matériau actif d'électrode positive de l'électrode positive de 3,0 mAh/cm² à 10,0 mAh/cm².

8. Batterie rechargeable au lithium-soufre selon la revendication 1, dans laquelle l'électrode positive comprend un composite de soufre-carbone en tant que matériau actif d'électrode positive.

9. Batterie rechargeable au lithium-soufre selon la revendication 8, dans laquelle le composite de soufre-carbone comprend 60 % en poids à 90 % en poids de soufre sur la base du poids total du composite de soufre-carbone.

10. Batterie rechargeable au lithium-soufre selon la revendication 2, dans laquelle le solvant non aqueux comprend en outre un éther non linéaire fluoré, un éther cyclique, un polyéther, ou un mélange de ces derniers.
